# EUROPÄISCHE PATENTSCHRIFT

(11) **EP 0 925 202 B1**
(45) Veröffentlichungstag und Bekanntmachung des Hinweises auf die Patenterteilung: **02.01.2002**
(21) Anmeldenummer: 97942021.3
(22) Anmeldetag: 11.09.1997
(51) Int. Cl.: B60K 15/05, B65D 51/00, F16L 55/11

(54) **BETANKUNGSARMATUR**
FUELLING FIXTURE
ARMATURE DE RAVITAILLEMENT

(30) Priorität: 11.09.1996 DE 29615806 U
(43) Veröffentlichungstag der Anmeldung: 30.06.1999
(73) Patentinhaber: WEH GmbH, VERBINDUNGSTECHNIK, D-89257 Illertissen (DE)
(72) Erfinder: WEH, Wolfgang, D-89257 Illertissen (DE); WEH, Ervin, D-89257 Illertissen (DE)
(74) Vertreter: Fiener, Josef
(86) Internationale Anmeldenummer: EP9704983
(87) Internationale Veröffentlichungsnummer: WO9810952

(56) Entgegenhaltungen:
- EP-A- 0 545 813
- GB-A- 2 239 006
- US-A- 4 341 322
- PATENT ABSTRACTS OF JAPAN vol. 010, no. 336 (M-535), 14.November 1986 & JP 61 139518 A (NISSAN MOTOR CO LTD), 26.Juni 1986,

## Beschreibung

Die Erfindung betrifft eine Betankungsarmatur für Fahrzeuge mit einer Karosserie und einem fahrzeugseitigen Tankanschlußnippel gemäß den Merkmalen des Oberbegriffs des Anspruches 1.

Derartige Betankungsarmaturen werden für die Betankung von gasbetriebenen Fahrzeugen bereits im größeren Umfange benutzt. Dabei gewinnen insbesondere Erdgasfahrzeuge aufgrund ihres relativ geringen Schadstoffausstosses und Brennstoffverbrauches zunehmend Bedeutung. Die Betankungsarmatur wird hierbei an der Außenseite des Fahrzeuges, jedoch teilweise auch im Innenraum des Fahrzeuges oder hinter Karosserieklappen installiert, um somit das Anschließen einer Füllkupplung an dem fahrzeugseitigen Tankanschlußnippel zu ermöglichen. Die Betankungsarmatur ist dabei mit einem Hochdruckschlauch mit dem Gastank des Fahrzeuges verbunden. Der Tankanschlußnippel wird dabei häufig nur mittels Kontermuttern an der Fahrzeug-Karosserie befestigt.

Diese Anbringungsart ist jedoch problematisch, da hierbei der Tankanschlußnippel relativ weit von einem Karosseriebereich absteht. Darüberhinaus wird die Befüllöffnung des Tankanschlußnippels häufig nur mit einer Kunststoffkappe abgedeckt, die jedoch die Verschmutzung des Tankanschlußnippels, insbesondere bei Einsatz in staubiger Umgebung, oder ein Vereisung im Winter nicht vollständig ausschließen kann. Dies gilt auch für Betankungsarmaturen gemäß der JP-A- 61/139518 oder der EP-A- 545 813, die den nächstkommenden Stand der Technik bildet. Daher kann es dann bei der Betankung zur Einbringung von Fremdkörper oder Schmutzpartikeln in die Gasleitungen des Fahrzeuges kommen, was zur übermäßigen Filterbelastung oder gar zur Funktionsunfähigkeit führen kann.

Demzufolge liegt der Erfindung die Aufgabe zugrunde, eine Betankungsarmatur für Fahrzeuge zu schaffen, die eine einfache und sichere Installation ermöglicht und eine Verschmutzung des Tankanschlußnippels ausschließt.

Diese Aufgabe wird gelöst durch eine Betankungsarmatur mit den Merkmalen des Anspruches 1.

Durch die Anordnung des Tankanschlußnippels in einem topfförmigen Gehäuse, in das ein den Tankanschlußnippel umhüllender Tankdeckel einsetz- bzw. einschraubbar ist, wird eine vollständige Abdeckung des Tankanschlußnippels nach außen hin gewährleistet. Hierdurch wird eine vollkommen staubgeschützte Unterbringung des Tankanschlußnippels sichergestellt. Darüberhinaus läßt sich dieses topfförmige Gehäuse, das aus zwei ineinandergesteckten Gehäusehülsen besteht, sicher und stabil an der Karosserie der Fahrzeuges befestigen. Somit werden von der Karosserie nach außen hin abstehende Teile vermieden, so daß es nicht zu einer Beschädigung des Tankanschlußnippels kommen kann.

Darüberhinaus wird durch das Einsetzen des Tankdeckels bevorzugt ein Sensor bzw. Mikroschalter zur Startunterbrechung des Fahrzeuges aktiviert, der ein Starten des Fahrzeuges bei angekuppelter Füllkupplung verhindert. Vielmehr muß die Füllkupplung abgekuppelt sein und der Tankdeckel ordnungsgemäß in dem topfförmigen Gehäuse eingesetzt sein, um ein Starten des Fahrzeuges zuzulassen. Damit werden bereits vorgekommene Unfälle durch Starten und Wegfahren des Fahrzeuges bei angeschlossener Füllkupplung sicher unterbunden.

Weiterhin wird durch den in das topfförmige Gehäuse eingeschraubten Tankdeckel eine zuverlässige Abdichtung erreicht, so daß selbst bei defekten Rückschlagventilen des Tankanschlußnippels ein unkontrolliertes Ausströmen von Gas unterbunden wird. Dies ist insbesondere dann wichtig, wenn die Betankungsarmatur im Fahrgast-Innenraum oder einem damit in Verbindung stehenden Abteil (z. B. Kofferraum bei einem Steilheck-Fahrzeug) installiert ist. Durch die vollständige Umhüllung des Tankanschlußnippels kann somit in einfacher Weise eine verdeckte Entlüftungsleitung an das topfförmige Gehäuse angeschlossen werden, mit der gegebenenfalls aus dem Tankanschlußnippel austretendes Gas kontrolliert an eine ungefährliche Stelle (z. B. dem Fahrzeugunterboden) abgeleitet werden kann.

Weitere vorteilhafte Ausgestaltungen der Betankungsarmatur sind Gegenstand der Unteransprüche.

Nachfolgend werden drei Ausführungsbeispiele der Betankungsarmatur anhand der Zeichnungen näher erläutert und beschrieben. Hierbei zeigen:
- Fig. 1: eine Betankungsarmatur in Schnittdarstellung;
- Fig. 2: eine ähnliche Betankungsarmatur wie in Fig. 1, jedoch mit einer angeschlossenen, zusätzlichen Entlüftungsleitung; und
- Fig. 3: eine ähnliche Betankungsarmatur wie in Fig. 1 in weiter vereinfachter Ausführung in zwei Drehstellungen.

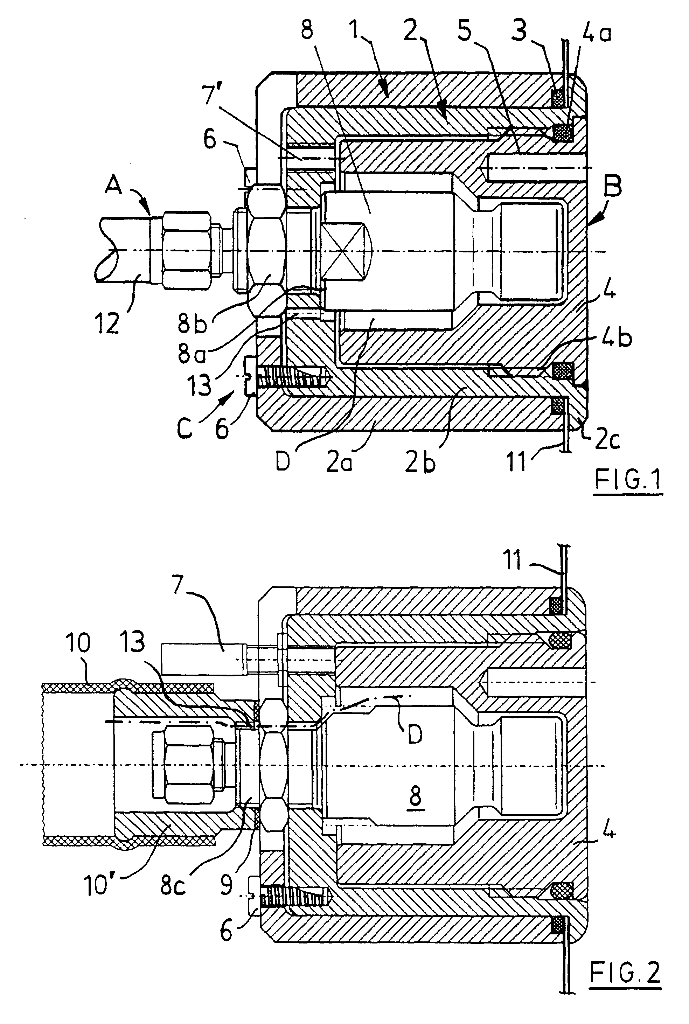

In Fig. 1 ist eine Betankungsarmatur 1 im Längsschnitt dargestellt, während ein zentraler, rotationssymmetrischer Tankanschlußnippel 8 ungeschnitten dargestellt ist. Mit dem Kennbuchstaben A wird hierbei die Auslaßseite des Tankanschlußnippels 8 bezeichnet, während die Betankungsseite mit dem Kennbuchstaben B bezeichnet ist. Von der Betankungsseite B kann auf den Tankanschlußnippel 8 eine nicht näher dargestellte Füllkupplung, z. B. gemäß dem europäischen Patent 0 340 879 angeschlossen werden. Das Anschließen der Füllkupplung erfolgt dabei selbstverständlich bei abgenommenen Tankdeckel 4. Bei der Betankung strömt das Gas vom Tankanschlußnippel 8 über eine Befülleitung 12 an der Außlaßseite A zu einem nicht näher dargestellten Tank im Fahrzeug.

Die Betankungsarmatur 1 weist ein glocken- oder topfförmiges Gehäuse 2 auf, das den Tankanschlußnippel 8 umgibt. In dieses topfförmige Gehäuse 2 ist der vorstehend erwähnte Tankdeckel 4 einschraubbar, so daß der Tankanschlußnippel 8 vollständig umhüllt wird. Das topfförmige Gehäuse 2 besteht hierbei aus zwei ineinandergesteckten, ebenfalls topfförmigen Gehäusehülsen 2a, 2b, so daß durch die gegeneinander gerichtete Verschraubung der beiden Gehäusehülsen 2a und 2b mittels mehrerer Schrauben 6 das topfförmige Gehäuse 2 an der ausschnittsweise dargestellten Karosserie 11 des Fahrzeuges fixiert ist. Wie aus der unteren Hälfte von Fig. 1 ersichtlich ist, wird mittels der an der Stirnseite C des Gehäuses 2 vorgesehenen Schrauben 6 die radial innere Gehäusehülse 2b mit einem Ringkragen 2c gegen die äußere Gehäusehülse 2a gezogen, wodurch das Karosserieblech 11 des Fahrzeuges dazwischen eingeklemmt wird und somit die Betankungsarmatur 1 sicher an der Karosserie 11 verankert ist. Die Betankungsarmatur 1 ist damit im wesentlichen bündig mit der Außenfläche der Karosserie 11, wobei auch der Tankdeckel 4 bündig mit der Außenfläche des Gehäuses 2 abschließt. Die lösbaren Befestigungsteile selbst, nämlich die Schrauben 6 und die Verschraubung der Befülleitung 12 sind somit im Karosserieinneren untergebracht, so daß Manipulationen ausgeschlossen sind.

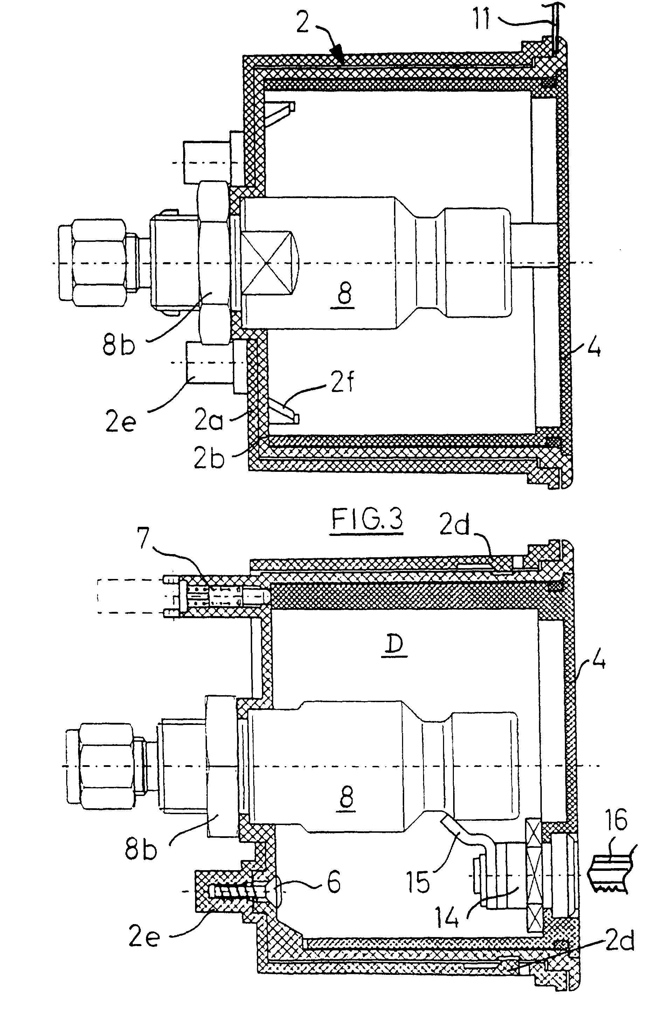

Dies gilt auch für die Verschraubung des Tankanschlußnippels 8 mittels einer Überwurfmutter 8b, mit der der Tankanschlußnippel 8 mit einem Ringflansch 8a in stabiler Weise an der inneren Gehäusehülse 2b anliegt. Hierdurch wird eine sichere Befestigung des Tankanschlußnippels 8 erreicht. Die äußere Gehäusehülse 2b kann dabei auch aus Kunststoff bestehen, da sich durch die breitflächige Anlage am Karosserieblech 11 eine sichere Abstützung ergibt. Die radial innere Gehäusehülse 2b ist aufgrund der bevorzugt vorgesehenen Verschraubung mit dem Tankdeckel 4 aus Stahl gefertigt. An der Anlagefläche der Gehäusehülsen 2a bzw. 2b ist eine Ringdichtung 3 vorgesehen, mit der eine sichere, dichtende Anlage am Rand des Ausschnittes der Karosserie erreicht wird. Auch an dem gegenüberliegenden Ringkragen 2c der inneren Gehäusehülse 2a kann eine derartige Dichtung vorgesehen sein. Des weiteren ist zwischen der inneren Gehäusehülse 2a und dem Tankdeckel 4 eine Ringdichtung 4a vorgesehen, mit der der Innenraum der Betankungarmatur 1 vollständig abgedichtet ist. Der Anschluß des Tankdeckels 4 erfolgt hierbei bevorzugt durch ein Schraubgewinde 4b, jedoch kann die Einschraubbewegung auch durch einen "Bajonettverschluß" verwirklicht sein oder wie in Fig. 3 einfach eingesteckt werden und mit einem Schloß 14 mit Schlüssel 15 verriegelt werden.

In dem Tankdeckel 4 sind zudem bevorzugt mehrere Sackloch-Bohrungen 5 vorgesehen, mit der eine Verdrehkennung oder Kodierung des Tankdeckels 4 erfolgt. Beispielsweise können zwei derartiger Bohrungen 5 in einem genau definierten Teilungswinkel von beispielsweise 170° angeordnet sein, so daß der Tankdeckel 4 nur mit einem dazu passenden Steckschlüssel mit ebenfalls unter 170° versetzten und in die Bohrungen 5 passenden Stifte geöffnet werden kann. Ein derartiger Steckschlüssel kann bevorzugt an der Betankungs-Füllkupplung oder im Fahrzeuginneren griffbereit angeordnet sein, so daß dieser Steckschlüssel für die Betankung immer zur Hand ist. Mit der ersten Variante kann auch eine spezifische Zuordnung zu einer bestimmten Gasart oder einem Befülldruck realisiert werden.

An der Stirnseite C ist des weiteren in der inneren Gehäusehülse 2b eine Aufnahme 7' für einen Sensor 7 (vgl. Fig. 2) vorgesehen, der den ordnungsgemäß eingesetzten Zustand des Tankdeckels 4 feststellt. Hierdurch wird sichergestellt, daß bei eingesetztem Tankdeckel 4 die Betankungsarmatur 1 ordnungsgemäß verschlossen und von der Füllkupplung abgetrennt ist. Der Sensor 7 kann hierbei auf Berührung des Tankdeckels 4 ansprechen, da dieser bis zu dem Mikroschalter bzw. Sensor 7 eingeschraubt wird. Bevorzugt ist jedoch zur Unterbindung von Funkenbildung der Sensor 7 als Induktivschalter (z. B. als Hall-Sensor oder Reed-Kontakt) ausgebildet, wobei der Tankdeckel aus magnetisierbaren Material z. B. Stahl besteht, so daß der Tankdeckel 4 in der hier dargestellten eingeschraubten Stellung den Sensor 7 aktiviert. Diese "Aktivierung" erfolgt dabei so, daß bei abgenommenen Zustand des Tankdeckels 4 eine Startunterbrechung des Fahrzeuges erfolgt, während bei ordnungsgemäß eingesetztem Tankdeckel 4 ein Starten des Fahrzeuges möglich ist.

Unterhalb der Befestigungsmutter 8b des Tankanschlußnippels 8 ist zudem eine Bohrung 13 als Fluidpassage vorgesehen, mit der eine kontrollierte Entlüftung aus dem Innenraum D zwischen Tankdeckel 4 und Anschlußnippel 8 erfolgen kann. Beispielsweise kann hieran ein dünner Schlauch angeschlossen sein, mit dem bei einem Defekt am Tankanschlußnippel 8 austretendes Gas an eine ungefährliche Stelle abgeleitet werden kann.

In Fig. 2 ist bei ansonsten gleichen Aufbau der Betankungsarmatur 1 eine bevorzugte Ausführung der Fluidpassage 13 dargestellt. Über die Befülleitung 12 ist hierbei nämlich eine koaxiale Entlüftungsleitung 10 gestülpt, die mittels einer Hülse 10' an dem Anschlußgewinde 8c des Tankanschlußnippels 8 befestigt ist. Durch eine Ringdichtung 9 zwischen der Hülse 10' und der Überwurfmutter 8b wird dabei eine Abdichtung nach außen hin erreicht, so daß gegebenenfalls vom Tankanschlußnippel 8 ausströmendes Gas durch die Fluidpassage 13 entlang dem Anschlußgewinde 8c zu der Entlüftungsleitung 10 entweichen kann, wie dies strichpunktiert angedeutet ist. Zur Schaffung dieser Fluidpassage 13 genügt beispielsweise das Einfräsen einer schmalen Axialnut entlang dem Anschlußgewinde 8c des Tankanschlußnippels 8 bis zu der Anlagefläche 8a, so daß eine Passage zu dem Innenraum D geschaffen ist.

Es sei hierbei nochmals darauf hingewiesen, daß aufgrund der Dichtung 4a im Bereich des Schraubgewindes 4b des Tankdeckels 4 ein Austreten von Gas nach außen hin zur Betankungsseite B sicher unterbunden wird, während die Entlüftungsleitung 10 an eine ungefährliche Stelle am Fahrzeug z. B. am Fahrzeugunterboden geführt werden kann. Dabei können auch mehrere Dichtungen 4a am Außenumfang bzw. auch an der Stirnseite des Tankdeckels 4 vorgesehen sein.

In Fig. 3 ist bei ansonsten ähnlichem Aufbau der Betankungsarmatur wie in Fig. 1 und 2 eine weiter vereinfachte Ausführung dargestellt. Hierbei werden für funktionsgleiche Bauteile dementsprechend gleiche Bezugszeichen verwendet. In Fig. 3 ist hierbei die Betankungsarmatur in zwei zueinander verdrehten Schnittdarstellungen gezeigt. Im Unterschied zu den Fig. 1 und 2 sind hierbei die Schrauben 6 zum Zusammenspannen der ineinandergesteckten Gewindehülsen 2a und 2b vom Innenraum D des Gehäuses 2 verschraubt. Hierdurch wird die Montage des Gehäuses wesentlich vereinfacht. Die Schrauben 6 greifen hierbei in Verlängerungen 2e des äußeren Gehäuseteils 2a ein. Am inneren Gehäuseteil 2b sind zudem im Eckbereich mehrere Versteifungsrippen 2f vorgesehen, die in entsprechende Nuten des Tankdeckels 4 eingreifen. Diese Lösung ist insbesondere dann vorgesehen, wenn der Tankdeckel 4 nicht in das Gehäuse 2 eingeschraubt wird, sondern wie in der unteren Hälfte dargestellt ist mit einem üblichen Schloß 14 und einem Schlüssel 16 (teilweise dargestellt) verriegelt wird. Bei der Verriegelung hintergreift ein Sperriegel 15 des Schlosses 14 eine Ringnut des Tankanschlußnippels 8, so daß der Tankdeckel in axialer und in Verdrehrichtung arretiert ist. Der Sperriegel 15 des Schlosses 14 kann hierbei jedoch auch an einer entsprechenden Profilierung des Gehäuses 2 eingreifen.

Von Bedeutung ist weiterhin die in der unteren Hälfte von Fig. 3 dargestellte Ausführung der äußeren Gehäusehülse 2a, die an ihrem Umfang mehrere federnde Rasthaken 2d aufweist. Hierdurch können die beiden Gehäuseteile 2a und 2b zusammengesteckt werden, wobei die Rasthaken 2d in die innere Gehäusehülse 2b eingreifen. Hierdurch wird bei der Montage und bei dem Transport eine gegenseitige Fixierung der beiden Gehäusehülsen 2a und 2b erreicht.

Insgesamt ergibt sich somit eine einfach an der Fahrzeugkarosserie zu befestigende Betankungsarmatur 1, die eine besonders sichere Umkapselung des Tankanschlußnippels 8 gewährleistet. Durch die Umkapselung wird somit neben der stabilen Befestigung eine vollständige Staubfreiheit des Tankanschlußnippels 8 ermöglicht, sowie auch eine Vereisung sicher unterbunden. Zudem erfüllen die Bauteile des Betankungarmatur 1 mehrere Funktionen, beispielsweise kann der Tankdeckel 4 in bevorzugter Weise den Sensor 7 zur Startunterbrechung aktivieren, so daß ein Starten des Fahrzeuges bei abgenommenen Tankdeckel 4 sicher verhindert wird.

## Patentansprüche

1. Betankungsarmatur für Fahrzeuge mit einer Karosserie (11), mit einem fahrzeugseitigen Tankanschlußnippel (8), an den eine Füllkupplung anschließbar ist, und der Tankanschlußnippel (8) von einem topfförmigen Gehäuse (2) umgeben ist, in das ein den Tankanschlußnippel (8) umhüllender Tankdeckel (4) einsetzbar ist,
**dadurch gekennzeichnet, daß**
das Gehäuse (2) aus zwei ineinandergesteckten, topfförmigen Gehäusehülsen (2a, 2b) besteht, die an der Karosserie (11) des Fahrzeuges fixiert sind, wobei die innere Gehäusehülse (2b) durch die Verschraubung des Tankanschlußnippels (8) mittels einer Überwurfmutter (8b) gegen einen Ringflansch (8a) des Tankanschlußnippels (8) anliegt.

2. Betankungsarmatur nach Ansprüch 1,
**dadurch gekennzeichnet, daß**
der Tankdeckel (4) bündig mit der Außenfläche des Gehäuses (2) ausgebildet ist.

3. Betankungsarmatur nach Anspruch 1 oder 2,
**dadurch gekennzeichnet, daß**
zwischen dem Tankdeckel (4) und dem Gehäuse (2) wenigstens eine Ringdichtung (4a) angeordnet ist.

4. Betankungsarmatur nach einem der Ansprüche 1 bis 3,
**dadurch gekennzeichnet, daß**
zwischen den beiden ineinandergesteckten Gehäusehülsen (2a, 2b) eine Dichtung (3) angeordnet ist.

5. Betankungsarmatur nach einem der Ansprüche 1 bis 4,
**dadurch gekennzeichnet, daß**
die ineinandergesteckten Gehäusehülsen (2a, 2b) zur Festlegung an der Karosserie (11) des Fahrzeuges mit Schrauben (6) gegeneinander verspannbar sind.

6. Betankungsarmatur nach Anspruch 5,
**dadurch gekennzeichnet, daß**
die Schrauben (6) an den von dem Tankdeckel (4) abgewandten Stirnseiten (C) der Gehäusehülsen (2a, 2b) angeordnet sind.

7. Betankungsarmatur nach einem der Ansprüche 1 bis 6,
**dadurch gekennzeichnet, daß**
an der von dem Tankdeckel (4) abgewandten Stirnseite (C) des Gehäuses (2) ein Sensor (7) zur Feststellung des abgekuppelten Zustandes der Füllkupplung und des eingesetzten Zustandes des Tankdeckels (4) angeordnet ist.

8. Betankungsarmatur nach einem der Ansprüche 1 bis 7,
**dadurch gekennzeichnet, daß**
der Tankdeckel (4) eine charakteristische Verdrehkennung mit Bohrungen (5) zum Ansetzen eines Verdrehwerkzeuges oder ein Schloß (14) aufweist.

9. Betankungsarmatur nach einem der Ansprüche 1 bis 8,
**dadurch gekennzeichnet, daß**
auslaßseitig (A) eine Entlüftungsleitung (10) angeschlossen ist, die mit dem Innenraum (D) zwischen Tankdeckel (4) und Tankanschlußnippel (8) in Verbindung steht.

## Claims

1. Fuelling fixture for vehicles equipped with a body (11), comprising a fuelling nipple (8) at the vehicle, to which nipple (8) a filling connection may be attached, and the fuelling nipple (8) is enclosed by a pot-like housing (2), into which a filler cap (4) enclosing the fuelling nipple (8) may be inserted,
**characterized in that**
the housing (2) consists of two pot-like housing sleeves (2a, 2b) fitted into each other, which are fixed to the body (11) of the vehicle, wherein the inner housing sleeve (2b) abuts against a ring-shaped flange (8a) of the fuelling nipple (8) by screw-fastening the fuelling nipple (8) by means of a union nut (8b).

2. Fuelling fixture as claimed in Claim 1, **characterized in that** the filler cap (4) is formed flush with the outer surface of the housing (2).

3. Fuelling fixture as claimed in Claim 1 or Claim 2, **characterized in that** at least one ring seal (4a) is positioned between the filler cap (4) and the housing (2).

4. Fuelling fixture as claimed in any one of Claims 1 to 3, **characterized in that** a seal (3) is located between the two housing sleeves (2a, 2b) fitted into each other.

5. Fuelling fixture as claimed in any one of Claims 1 to 4, **characterized in that** the housing sleeves (2a, 2b) fitted into each other can be fastened relative to each other with screws (6) for fixing to the body (11) of the vehicle.

6. Fuelling fixture as claimed in Claim 5, **characterized in that** the screws (6) are arranged on the front sides (C) of the housing sleeves (2a, 2b), which face away from the filler cap (4).

7. Fuelling fixture as claimed in any one of Claims 1 to 6, **characterized in that** on the front side (C) of the housing (2), which faces away from the filler cap (4), a sensor (7) for determining the disconnected state of the filling connection and the inserted state of the filler cap (4) is provided.

8. Fuelling fixture as claimed in any one of Claims 1 to 7, **characterized in that** the filler cap (4) has a characteristic torsion identification with bores (5) for engaging a torsion tool or a lock (14).

9. Fuelling fixture as claimed in any one of Claims 1 to 8, **characterized in that** a ventilation line (10) is connected on the outlet side (A), which is in communication with the interior (D) between the filler cap (4) and the fuelling nipple (8).

## Revendications

1. Dispositif de ravitaillement pour véhicule à carrosserie (11), comprenant un nipple (8) de réservoir auquel peut être raccordé un dispositif d'accouplement, sachant que le nipple (8) du réservoir est entouré par un boîtier en forme de pot (2) dans lequel peut être logé un couvercle (4) entourant le nipple (8) du réservoir, **caractérisé en ce que** le boîtier (2) est composé de deux douilles (2a, 2b) en forme de pot qui sont emboîtées l'une dans l'autre et qui sont fixées à la carrosserie (11) du véhicule, sachant que, du fait du vissage d'un écrou-raccord (8b) sur le nipple (8) du réservoir, la douille intérieure (2b) est appliquée contre une bride annulaire (8a) du nipple (8) du réservoir.

2. Dispositif de ravitaillement selon la revendication 1, **caractérisé en ce que** le couvercle (4) du réservoir est en affleurement avec la surface extérieure du boîtier (2).

3. Dispositif de ravitaillement selon la revendication 1 ou 2, **caractérisé en ce qu'**entre le couvercle (4) du réservoir et le boîtier (2) est disposée au moins une garniture d'étanchéité annulaire (4a).

4. Dispositif de ravitaillement selon l'une des revendications 1 à 3, **caractérisé en ce qu'**entre les deux douilles de boîtier (2a, 2b) emboîtées est disposée une garniture d'étanchéité (3).

5. Dispositif de ravitaillement selon l'une des revendications 1 à 4, **caractérisé en ce que** les douilles de boîtier (2a, 2b) emboîtées peuvent être assemblées à l'aide de vis (6) et ainsi être fixées à la carrosserie (11) du véhicule.

6. Dispositif de ravitaillement selon la revendication 5, **caractérisé en ce que** les vis (6) sont placées sur les faces frontales (C) des douilles de boîtier (2a, 2b) qui sont opposées au couvercle (4) du réservoir.

7. Dispositif de ravitaillement selon l'une des revendications 1 à 6, **caractérisé en ce que** sur la face frontale (C) du carter opposée au couvercle (4) du réservoir est disposé un capteur (7) pour indiquer l'état désaccouplé du dispositif d'accouplement et la mise en place du couvercle (4) du réservoir.

8. Dispositif de ravitaillement selon l'une des revendications 1 à 7, **caractérisé en ce que** le couvercle (4) du réservoir présente des marques caractéristiques pour le vissage comportant des perçages (5) destinés à recevoir un outil de vissage ou une serrure (14).

9. Dispositif de ravitaillement selon l'une des revendications 1 à 8, **caractérisé en ce que** du côté de la sortie (A) est raccordée une conduite d'aération (10) qui communique avec l'espace intérieur (D) entre le couvercle (4) du réservoir et le nipple (8) du réservoir.
